# EUROPÄISCHE PATENTSCHRIFT

(11) **EP 3 811 039 B1**
(45) Veröffentlichungstag und Bekanntmachung des Hinweises auf die Patenterteilung: **21.08.2024**
(21) Anmeldenummer: 19732621.8
(22) Anmeldetag: 19.06.2019
(51) Int. Cl.: G01F 23/263, G01F 23/00, G01F 23/80

(54) **FÜLLSTANDSSENSOR ODER GRENZSTANDSENSOR MIT TEMPERATURKOMPENSATION**
FILLING LEVEL SENSOR OR LIMIT LEVEL SENSOR HAVING TEMPERATURE COMPENSATION
CAPTEUR DE NIVEAU OU CAPTEUR DE LIMITE À COMPENSATION DE TEMPÉRATURE

(30) Priorität: 19.06.2018 DE 102018209904
(43) Veröffentlichungstag der Anmeldung: 28.04.2021
(73) Patentinhaber: VEGA Grieshaber KG, 77709 Wolfach (DE)
(72) Erfinder: ISENMANN, Marius, 77781 Biberach (DE); WEINZIERLE, Christian, 77709 Wolfach (DE)
(74) Vertreter: Maiwald GmbH
(86) Internationale Anmeldenummer: PCT/EP2019/066281
(87) Internationale Veröffentlichungsnummer: WO 2019/243458

(56) Entgegenhaltungen:
- DE-B- 1 237 467
- US-A1- 2014 352 402
- US-A1- 2015 323 372
- US-B1- 8 810 260

## Beschreibung

Für viele Anwendungen ist es nützlich, Grenzstände mit Hilfe eines Grenzstandsensors zu erfassen, um beispielsweise ein Überlaufen oder Leerlaufen eines Behälters, in dem sich ein Füllgut befindet, zu vermeiden. Typische Anwendungen für die Überwachung eines Grenzstandes sind beispielsweise Prozesstanks, Lagertanks, Silos oder Rohrleitungen in der Prozessindustrie. Solche Grenzstandsensoren werden beispielsweise bei Flüssigkeiten, sowie granulierten und pulverförmigen Schüttgütern eingesetzt.

Je nach Eigenschaft des Füllguts, sowie den individuellen Prozessbedingungen werden unterschiedliche Konfigurationen für die Grenzstandschalter bevorzugt. Bekannt sind beispielsweise TDR-Melder (TDR: Time Domain Reflectometry), konduktive Grenzstandsensoren, Vibrationsgrenzschalter, sowie Sensoren, die nach dem kapazitiven Messprinzip arbeiten. Der Grenzstandsensor erzeugt einen Schaltbefehl, welcher beispielsweise Befülleinrichtungen, wie Förderbänder oder Pumpen startet oder stoppt. Kapazitive Grenzstandschalter weisen insbesondere den Vorteil auf, dass keine mechanisch bewegten Teile vorgesehen sein müssen und dass Messungen durch eine aus elektrisch isolierendem Material bestehende Wand hindurch vorgenommen werden können. Dadurch müssen keine aufwändigen Vorkehrehrungen getroffen werden, um Dichtungsprobleme zu vermeiden.

Das vom Grenzstandsensor erfasste Messsignal ändert sich, je nachdem, ob die Messsonde des Grenzstandsensors vom Füllgut umgeben ist oder nicht. Auch kann das Messsignal davon abhängen, ob die Messsonde sauber ist oder ob sich darauf Anhaftungen des Füllguts befinden.

Es hat sich jedoch gezeigt, dass das erfasste Messsignal bei vielen Grenzstandsensoren zusätzlich von der Temperatur abhängt, welcher der Grenzstandsensor ausgesetzt ist. Durch unterschiedliche Prozesstemperaturen kann die Temperatur abhängig vom Einsatzgebiet und auch innerhalb eines gleichen Einsatzgebietes zeitlich sehr stark schwanken. Hierdurch kann eine zuverlässige Grenzstandüberwachung beeinträchtigt werden. Ähnliche Probleme treten bei Füllstandssensoren auf, sowie bei Sensoren zur Unterscheidung unterschiedlicher Füllgüter.

Dokument US 2015/03234372 A1 bezieht sich auf einen temperaturkompensierten Füllstandssensor.

Dokument US 2014/352402 A1 bezieht sich auf ein Messgerät zur Erfassung eines Füllstandes.

Es besteht daher ein Bedarf an Sensoren zur Detektion des Füllstandes, zur Überwachung des Grenzstandes und/oder zur Unterscheidung zwischen unterschiedlichen Medien, welche eine zuverlässigere Auswertung des Messsignals erlauben.

Ausführungsformen stellen einen Sensor zur Erzeugung eines Ausgabesignals zur Detektion eines Grenzstandes eines Mediums, eines Füllstandes des Mediums, und/oder zur Unterscheidung unterschiedlicher Medien bereit. Der Sensor weist eine Verarbeitungseinheit zur Verarbeitung eines Messsignals auf, welches mit Hilfe des Sensors erzeugt wurde und eine Referenzeinheit zur Erzeugung eines Referenzsignals. Die Verarbeitungseinheit ist ausgebildet, eine Temperaturkompensation unter Verwendung des Referenzsignals durchzuführen. Die Verarbeitungseinheit und die Referenzeinheit weisen jeweils eine Signalumwandlungseinheit mit einer temperaturabhängigen Signalumwandlung auf. Die Signalumwandlungseinheiten sind thermisch miteinander gekoppelt. Die Temperaturkompensation umfasst eine Kompensation der Temperaturabhängigkeit der Signalumwandlungseinheit der Verarbeitungseinheit mit Hilfe der thermischen Kopplung.

Das Medium kann flüssig und/oder fest sein. Insbesondere kann das Medium pulverförmig sein und/oder in granulierter Form vorliegen.

Das Messsignal weist ein periodisches Wechselspannungsanteil auf oder ist ein periodisches Wechselspannungssignal. Der Wechselspannungsanteil oder das

Wechselspannungssignal können im Wesentlichen aus Frequenzanteilen im Hochfrequenzbereich gebildet sein. Unter Hochfrequenz sollen im Rahmen dieser Anmeldung Frequenzen verstanden sein, welche größer sind als 50 MHz. Der Hochfrequenzbereich kann sich auf Frequenzen beziehen, welche geringer sind als 500 MHz.

Das Wechselspannungssignal oder der Wechselspanungsanteil des Messsignals kann amplitudenmoduliert sein. Die Frequenzen der Amplitudenmodulation können geringer sein als 200 kHz oder geringer sein als 50 kHz. Das Messsignal kann einen Gleichspannungsanteil als Offset aufweisen.

Das Referenzsignal ist ein Gleichspannungssignal. Die Referenzeinheit erhält ein Eingangssignal, wobei die Referenzeinheit das Referenzsignal in Abhängigkeit vom Eingangssignal erzeugt. Das Eingangssignal ist temperaturunabhängig oder im Wesentlichen temperaturunabhängig. Zusätzlich ist das Eingangssignal ein Gleichspannungssignal.

Die Temperaturkompensation kann konfiguriert sein, eine Temperaturabhängigkeit zu kompensieren, welche bei der Verarbeitung des Messsignals erzeugt wird. Das Ausgabesignal kann beispielsweise einen Grenzstand anzeigen (wie beispielsweise "Grenzstand erreicht" und "Grenzstand nicht erreicht"). Zusätzlich oder alternativ kann das Ausgabesignal einen Füllstand anzeigen, wie beispielsweise eine Füllhöhe in Metern. Zusätzlich oder alternativ kann das Ausgabesignal eine vordefinierte Medienklasse (wie "Ketchup") angeben, wenn das Ausgabesignal zur Unterscheidung unterschiedlicher Medien ausgebildet ist.

Die Signalumwandlungseinheit der Verarbeitungseinheit kann eine Diode aufweisen. Die Diode kann als Gleichrichter fungieren. Die Gleichrichterdiode kann Teil eines Demodulators sein. Der Demodulator kann ein Amplitudendemodulator (Hüllkurvendemodulator) sein.

Die Signalumwandlungseinheiten können gleich oder im Wesentlichen gleich ausgebildet sein. Die Signalumwandlungseinheiten können eine gleiche oder im Wesentlichen gleiche Signalumwandlung eines Eingangssignals in ein Ausgangssignal bereitstellen. Für jede der Signalumwandlungseinheiten ist die jeweilige Signalumwandlung temperaturabhängig. Die Temperaturabhängigkeiten können gleich oder im Wesentlichen gleich sein.

Die thermische Kopplung kann so ausgebildet sein, dass die Signalumwandlungseinheiten in wärmeleitender Verbindung miteinander sind. Alternativ oder zusätzlich ist es denkbar, dass die Signalumwandlungseinheiten jeweils in wärmeleitender Verbindung mit einem gleichen thermischen Reservoir sind. Das thermische Reservoir kann beispielsweise das Medium sein oder ein Behälter sein, in welchem das Medium enthalten ist. Die thermische Kopplung kann beispielsweise mit Hilfe eines Wäremeleitmediums, wie einer Wärmeleitpaste, erfolgen.

Das Gehäuse kann einen oder mehrere Außenverbindungsanschlüsse aufweisen zur Verbindung mit den im Inneren des Gehäuses angeordneten Signalumwandlungseinheiten. Das Halbleitermodul kann beispielsweise als SMD-Modul ausgebildet sein.

Gemäß einer Ausführungsform sind die Signalumwandlungseinheiten in einem gemeinsamen Gehäuse angeordnet, mit Hilfe dessen die thermische Kopplung bewirkt wird. Gemäß einer weiteren Ausführungsform sind die Signalumwandlungseinheiten jeweils Teil eines gemeinsamen Halbleitermoduls.

Gemäß einer weiteren Ausführungsform ist die Signalumwandlungseinheit der Auswerteeinheit ein Teil eines Demodulators.

Gemäß einer weiteren Ausführungsform weisen die Signalumwandlungseinheiten jeweils eine Diode auf, oder bestehen aus einer Diode.

Gemäß einer weiteren Ausführungsform ist der Sensor ausgebildet, mit Hilfe des Mediums eine Sondenimpedanz auszubilden. Das Messsignal kann von der Sondenimpedanz abhängen.

Die Sondenimpedanz kann mit Hilfe elektrischer und/oder magnetischer Felder erzeugt sein, welche sich zumindest teilweise durch das Medium erstrecken. Der Sensor kann eine oder mehrere Elektroden und/oder Spulen aufweisen zur Erzeugung des elektrischen und/oder des magnetischen Feldes. Insbesondere kann die Sondenimpedanz eine Kapazität aufweisen zu einer kapazitiven Messung an dem Medium.

Die Kapazität der Sondenimpedanz kann eine Sensorelektrode aufweisen, welche an einem distalen Ende eines Sensorarms des Sensors angeordnet ist. Eine dazu korrespondierende Elektrode der Kapazität kann ein rohrförmiges Bauteil des Sensors aufweisen, an dessen distalen Ende die Sensorelektrode angeordnet ist.

Gemäß einer weiteren Ausführungsform weist der Sensor eine Induktivität auf, welche in Serie mit einer Kapazitätselektrode des Sensors geschaltet ist. Die Kapazitätselektrode kann zu einer kapazitiven Messung an dem Medium ausgebildet sein.

Gemäß einer weiteren Ausführungsform ist der Sensor ausgebildet, die Sondenimpedanz mit einem Signal zu beaufschlagen, welches einen Wechselspannungssignal ist oder einen Wechselspannungsanteil aufweist.

Das Signal zur Beaufschlagung der Sondenimpedanz periodisch oder im Wesentlichen periodisch sein. Der Sensor kann ausgebildet sein, eine Oszillationsfrequenz des im Wesentlichen periodischen Signals stufenweise oder kontinuierlich zu verändern. Beispielsweise kann der Sensor einen Frequenzrampengenerator aufweisen. Das Signal mit welcher die Sondenimpedanz beaufschlagt wird, kann unmoduliert oder im Wesentlichen unmoduliert sein.

Gemäß einer weiteren Ausführungsform erzeugt die Verarbeitungseinheit eine verstärkte oder unverstärkte Signaldifferenz. Die Signaldifferenz kann abhängig vom Referenzsignal erzeugt sein. Die Verarbeitungseinheit kann einen Differenzverstärker aufweisen. Der Differenzverstärker kann das Referenzsignal als Eingangssignal erhalten. Die Signaldifferenz kann eine Differenz zwischen dem Referenzsignal einerseits und einem weiteren Signal sein, welches abhängig vom Messsignal erzeugt wird. Das weitere Signal kann das amplitudendemodulierte Messsignal sein, wobei das Messsignal einen Wechselspannungsanteil und einen Gleichspannungsanteil aufweist. Zusätzlich oder alternativ kann das weitere Signal ein amplitudenmoduliertes Signal eines Signals sein, welches durch Addition eines Gleichspannungsanteils zum Messsignal erzeugt wurde.

Gemäß einer Ausführungsform ist das Referenzsignal ein Gleichspannungssignal. Der Sensor kann so ausgebildet sein, dass das Gleichspannungssignal steuerbar einstellbar ist. Der Sensor kann einen Temperatursensor aufweisen zur Erfassung einer Temperatur. Des Weiteren kann der Sensor ausgebildet sein, das Gleichspannungssignal abhängig von der erfassten Temperatur einzustellen.

Gemäß einem ersten Aspekt der Erfindung erhält die Referenzeinheit ein Eingangssignal, welches ein Gleichspannungssignal ist. Die Referenzeinheit erzeugt das Referenzsignal in Abhängigkeit vom Eingangssignal. Insbesondere kann das Eingangssignal der Referenzeinheit an der Signalumwandlungseinheit, insbesondere an der Diode, der Referenzeinheit anliegen. Das Eingangssignal kann an einem, gesehen in Durchlassrichtung, Eingang der Diode anliegen. Alternativ oder zusätzlich kann das Referenzsignal an einem, gesehen in Durchlassrichtung, Ausgang der Diode erzeugt sein. Alternativ kann die Referenzeinheit das Referenzsignal abhängig von dem Signal am Ausgang der Diode erzeugen.

Gemäß einem zweiten Aspekt der Erfindung weist das Messsignal einen Wechselspannungsanteil und einen Gleichspannungsanteil auf. Beispielsweise kann der Sensor eine Schaltung aufweisen, welche zu einem Wechselspannungssignal einen Gleichspannungsanteil addiert. Der Sensor kann ausgebildet sein, dass die Höhe des Gleichspannungsanteils steuerbar einstellbar ist. Der Sensor kann einen Temperatursensor aufweisen zur Erfassung einer Temperatur. Des Weiteren kann der Sensor ausgebildet sein, die Höhe des Gleichspannungsanteils abhängig von der erfassten Temperatur einzustellen.

Der Sensor kann ausgebildet sein, den Gleichspannungsanteil so einzustellen, dass positive Amplitudenmaxima des Wechselspannungsanteils höher sind als eine Schwellenspannung der Diode der Signalumwandlungseinheit der Verarbeitungseinheit.

Gemäß einer weiteren Ausführungsform weist die Signalumwandlungseinheit der Verarbeitungseinheit eine Diode auf. Die Diode kann als Gleichrichter fungieren.

Gemäß einer weiteren Ausführungsform bildet die Diode der Signalumwandlungseinheit der Verarbeitungseinheit ein Teil eines Demodulators der Verarbeitungseinheit. Gemäß einer weiteren Ausführungsform ist der Demodulator ein Amplitudendemodulator .

Gemäß einer weiteren Ausführungsform weist der Sensor einen Temperatursensor auf. Der Temperatursensor kann zur Erfassung eines Temperaturwertes, der temperaturabhängigen Signalumwandlung angeordnet und ausgebildet sein. Der Sensor kann angeordnet und ausgebildet sein, einen Temperaturwert der Signalumwandlungseinheiten der Verarbeitungseinheit und der Signalumwandlungseinheit der Referenzeinheit zu erfassen. Der Temperatursensor kann thermisch mit den Signalumwandlungseinheiten gekoppelt sein. Gemäß einer weiteren Ausführungsform ist der Sensor ausgebildet, eine Höhe des Eingangssignals der Referenzeinheit und/oder eine Höhe des Gleichspannungsanteils des Messsignals abhängig von dem erfassten Temperaturwert einzustellen. Die Einstellung kann beispielsweise mit Hilfe einer Lookup-Tabelle erfolgen. Die Lookup-Tabelle kann in einem Datenspeicher des Sensors gespeichert sein.

Die vorstehenden sowie weitere vorteilhafte Merkmale der vorliegenden Offenbarung werden durch die nachfolgende detaillierte Beschreibung der beispielhaften Ausführungsformen unter Bezugnahme auf die beigefügten Zeichnungen noch deutlicher hervorgehen. Es wird betont, dass nicht alle möglichen Ausführungsformen der vorliegenden Offenbarung notwendigerweise alle oder einige der hier angegebenen Vorteile erzielen. Die Erfindung ist durch die beigefügten Patentansprüche definiert.
- Figur 1: zeigt schematisch einen Aufbau eines Sensors gemäß einem Ausführungsbeispiel;
- Figur 2: zeigt schematisch die Überwachung eines Grenzstandes mit Hilfe der Auswerteeinheit des in der Figur 1 gezeigten Sensors gemäß dem Ausführungsbeispiel;
- Figur 3: zeigt ein schematisches Blockschaltbild des in der Figur 1 gezeigten Sensors gemäß dem Ausführungsbeispiel;
- Figur 4: zeigt schematisch die vom Sensor erzeugten Signale, im Vergleich zu einem Vergleichsbeispiel, in welchem ein Hochfrequenzverstärker verwendet wird und welches nicht Teil des beanspruchten Gegenstandes ist; und
- Figur 5: zeigt einen Schaltplan für die Quelleneinheit, die Verarbeitungseinheit und die Referenzeinheit des in der Figur 1 gezeigten Sensors gemäß dem Ausführungsbeispiel.

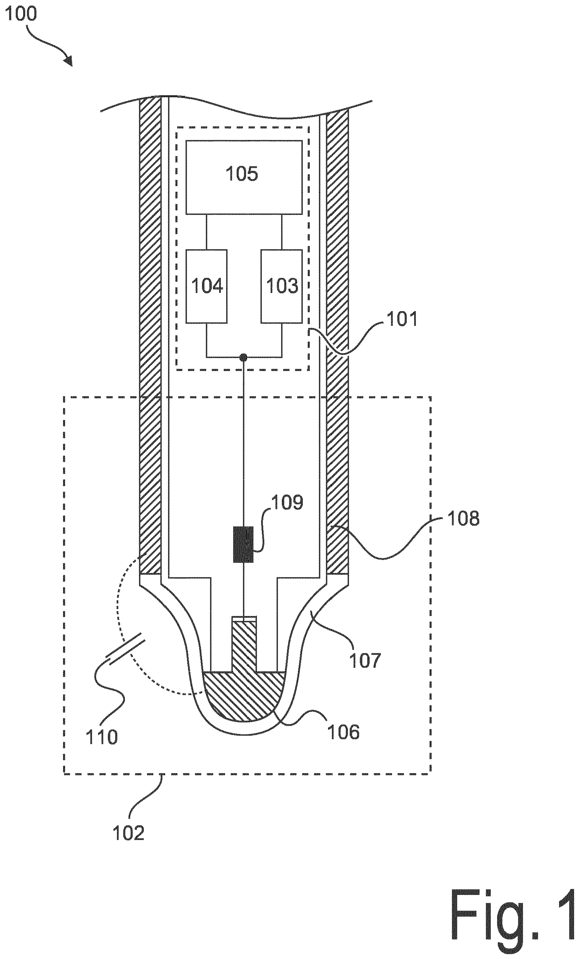

Die Figur 1 zeigt schematisch einen Sensor 100 gemäß einem Ausführungsbeispiel, welcher als Grenzstandsensor ausgebildet ist. Der Sensor 100 ist insbesondere als Impedanz-Grenzstandsensor ausgebildet, bei welchem Messungen von Impedanzwerten einer Sondenimpedanz dazu verwendet werden, den Grenzstand eines Mediums zu überwachen. Das Medium kann beispielsweise ein Füllmedium innerhalb eines Behälters sein.

In dem gezeigten Ausführungsbeispiel weist die Sondendimpedanz eine Kapazität auf, deren elektrische Felder sich zumindest teilweise durch das Medium hindurch erstrecken. Alternativ oder zusätzlich ist es jedoch auch denkbar, dass elektrische und/oder magnetische Felder eines ohmschen Widerstandes und/oder einer Impedanz sich durch das Medium erstrecken.

Die vorliegende Erfindung ist jedoch nicht auf einen solchen Sensor zur Grenzstandüberwachung beschränkt. Es ist denkbar, dass einer oder mehrere Aspekte der vorliegenden Erfindung zur Ausbildung von Sensoren verwendet werden, welche den Füllstand eines Mediums erfassen, und/oder, welche zwischen unterschiedlichen Medien unterscheiden.

Wie im Folgenden genauer beschrieben wird, ist der Sensor 100 als Resonanzsensor ausgebildet. Der Sensor 100 beaufschlagt die Sondenimpedanz mit einem Signal, welches einen Wechselspannungsanteil aufweist oder welches ein Wechselspannungssignal ist. Das Signal zur Beaufschlagung der Sondenimpedanz ist ein im Wesentlichen periodisches Signal einer zeitlich veränderlichen Frequenz. Der Sensor 100 ist ferner dazu ausgebildet, einen oder mehrere Parameter eines Resonanzverhaltens der Sondenimpedanz zu erfassen. Wie weiter unten genauer beschreiben ist, bestimmt der Sensor 100 eine Signalamplitude bei einer Resonanzfrequenz und den Frequenzwert der Resonanzfrequenz, welche jeweils von der Sondenimpedanz abhängen. Alternativ oder zusätzlich ist es auch denkbar, dass der Grenzstandsensor andere Parameter erfasst, wie beispielsweise die Resonanzschärfe (auch als Güte oder als Q-Faktor bezeichnet), eine Veränderung des Frequenzwertes der Resonanzfrequenz, und/oder eine Veränderung der Signalamplitude bei der Resonanzfrequenz.

Wie in der Figur 1 dargestellt ist, weist der Sensor 100 eine Messsonde 102 auf, welche eine Messelektrode 106, eine Isolierung 107, sowie eine Bezugselektrode 108 aufweist. Die Messelektrode 106 und die Bezugselektrode 108 bilden ein korrespondierendes Elektrodenpaar, zwischen welchen sich die Messkapazität 110 ausbildet, welche Teil der Sondenimpedanz ist. Die Messelektrode 106 und die Bezugselektrode 108 sind so ausgebildet, dass Feldlinien der Messkapazität 110 durch einen räumlichen Bereich verlaufen, in welchem sich im befüllten Zustand das Medium befindet. Die Messelektrode 106 und die Bezugselektrode 108 sind daher zur kapazitiven Messung am Medium ausgebildet. Es ist denkbar, dass der Sensor 100 so ausgebildet ist, dass die Bezugselektrode 108 zumindest teilweise durch die Wand des Behälters bereitgestellt wird, in welchem das Medium enthalten ist.

Die Elektroden 106 und 108 sind aus Metall gefertigt. Die Isolierung kann beispielsweise aus Kunststoff, insbesondere PEEK (Polyetheretherketon) gefertigt sein. Die Bezugselektrode 108 ist rohrförmig ausgebildet, wobei an einem distalen Ende der Bezugselektrode 108 die Messelektrode 106 angeordnet ist. Die Isolierung 107 bildet an einem distalen Ende der Bezugselektrode 108 einen dichtenden Abschluss, wobei in einem dadurch gebildeten Innenraum der Messsonde 102 die Messelektrode 106 angeordnet ist. Im befüllten Zustand ist ein distaler Endabschnitt der Messsonde 102 vom Medium so umgeben, dass ein Endabschnitt der Bezugselektrode 108 in Kontakt mit dem Medium ist. Es ist jedoch auch denkbar, dass der Sensor 100 so ausgebildet ist, dass ein befüllter Zustand dann detektiert wird, wenn das Medium vom distalen Endabschnitt der Messsonde 102 einen Abstand aufweist, welcher geringer ist als ein vorgegebener Abstand.

Die Sonde 102 weist des Weiteren eine Induktivität 109 auf, welche in Serie mit der Messelektrode 106 und somit mit der Messkapazität 110 geschaltet ist. In dem gezeigten Ausführungsbeispiel ist die Induktivität 109 diskret ausgebildet. Insbesondere bedeutet dies, dass die Induktivität als separates Bauteil von den übrigen Komponenten ausgebildet ist. Die Induktivität 109 kann beispielsweise als Luftspule ausgebildet sein. Der Induktivitätswert der Induktivität 109 ist so gewählt, dass sich die Resonanzfrequenz, welche von der Induktivität 109 und von der Messkapazität 110 abhängt, für unterschiedliche zu messende Medien und/oder Füllzustände (voll, leer mit Anhaftungen des Füllgutes oder leer ohne Anhaftungen des Füllgutes) zwischen 100 MHz und 200 MHz einstellt. Ein Induktivitätswert der Induktivität 109 kann beispielswiese in einem Bereich zwischen 0,5 Nanohenry und 1000 Nanohenry liegen, insbesondere in einem Bereich zwischen 0,5 Nanohenry und 700 Nanohenry oder in einem Bereich zwischen 0,5 Nanohenry und 200 Nanohenry.

Der Sensor 100 weist des Weiteren eine Ansteuer- und Auswerteeinheit 101 auf, welche eine Signalerzeugungseinheit 103, eine Verarbeitungseinheit 104, sowie eine Steuereinheit 105 aufweist. Die Signalerzeugungseinheit 103 ist ausgebildet, die Sondenimpedanz aus der Induktivität 109 und der Messkapazität 110 mit einem Sondensignal zu beaufschlagen. Die Verarbeitungseinheit 104 ist dazu ausgebildet, ein Messsignal, welches mit Hilfe der mit dem Sondensignal beaufschlagten Sondenimpedanz erzeugt wird zu verarbeiten. Die Steuereinheit 105 ist dazu ausgebildet, den Frequenzwert der Resonanzfrequenz, sowie einen Amplitudenwert bei der Resonanzfrequenz zu bestimmen, welcher von einem Betragswert der Sondenimpedanz bei der Resonanzfrequenz abhängt. Die Steuereinheit 105 erzeugt, abhängig von den ermittelten Werten, ein Ausgabesignal des Sensors 100, beispielsweise in Form einer oder mehrerer Schaltbefehle.

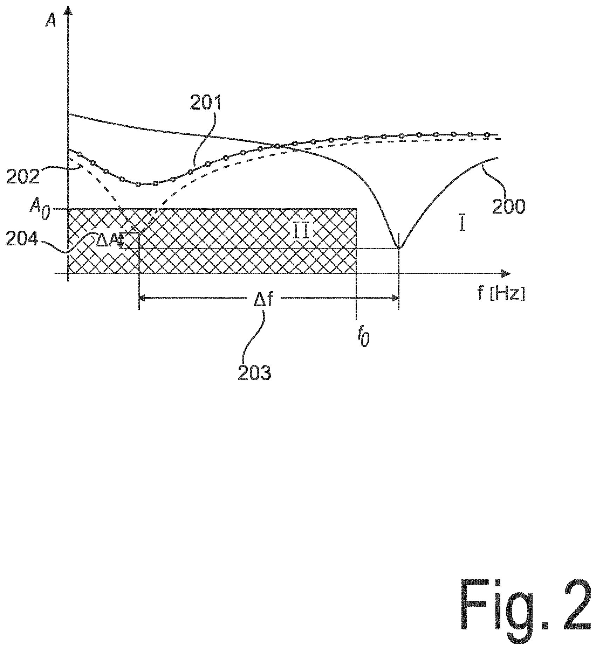

Die Figur 2 zeigt schematisch die Überwachung des Grenzstandes durch den Sensor 100 abhängig vom ermittelten Frequenzwert der Resonanzfrequenz und abhängig von der ermittelten Signalamplitude bei der Resonanzfrequenz. Die Kurve 200 zeigt den frequenzabhängigen Verlauf der Signalamplitude A bei einer sauberen Messsonde (d.h. ohne Anhaftung des Mediums am Grenzstandsensor), wenn die Füllhöhe des Mediums geringer ist als der vordefinierte Grenzstand. Die Kurve 201 zeigt den frequenzabhängigen Verlauf der Signalamplitude *A*, wenn die Füllhöhe geringer ist als der vordefinierte Grenzstand, jedoch Anhaftungen des Mediums (wie beispielsweise Anhaftungen von Ketchup) sich am Sensor befinden. Die Kurve 202 zeigt den frequenzabhängigen Verlauf der Signalamplitude *A*, wenn die Füllhöhe größer oder gleich ist als der vordefinierte Grenzstand, also wenn der distale Endabschnitt der Messsonde 102 (gezeigt in der Figur 1) vom Medium bedeckt ist.

Wie im Nachfolgenden erläutert ist, werden die Schaltbefehle "leer" und "voll" von der Steuereinheit 105 abhängig vom Frequenzwert *f* der Resonanzfrequenz und abhängig vom Amplitudenwert *A* des Messsignals bei der Resonanzfrequenz erzeugt. Der Amplitudenwert *A* ist abhängig vom Betrag der Sondenimpedanz. Befindet sich das Minimum im Bereich *I* (d.h. ist der Frequenzwert der Resonanzfrequenz größer als ein Frequenzwert *f₀* oder ist die Amplitude bei der Resonanzfrequenz größer als ein Amplitudenwert *A₀*, so gibt die Steuereinheit 150 den Schaltbefehl "leer" aus. Auf der anderen Seite, wenn sich das Minimum im Bereich *II* befindet, d.h., wenn ich die Resonanzfrequenz bei einem Frequenzwert befindet, welcher geringer ist, als der Frequenzwert *f₀* und der Amplitudenwert geringer ist als der Amplitudenwert *z₀*, so wird der Schaltbefehl "voll" ausgegeben.

Die beiden, durch den Frequenzwert *f₀* und den Amplitudenwert *A₀* definierten Schaltbereiche *I* und *II* können beispielsweise bei der Herstellung des Sensors unveränderlich festgelegt werden. Alternativ ist es denkbar, dass der Sensor so ausgebildet ist, dass die Schaltbereiche *I* und *II* durch einen Benutzer konfigurierbar sind. Beispielsweise ist es denkbar, dass der Frequenzwert *f₀* und/oder der Amplitudenwert *A₀* mit Hilfe eines Benutzerinterfaces des Sensors einstellbar sind. Es hat sich jedoch gezeigt, dass für viele Anwendungen der Frequenzwert *f₀* und der Amplitudenwert *A₀* so auswählbar sind, dass unveränderlich vorgesehene Werte ausreichend sind, um eine zuverlässige Grenzstandüberwachung zu gewährleisten. Dadurch kann ein kundenseitiger Abgleich, der gegebenenfalls zeitaufwändig ist, unterbleiben.

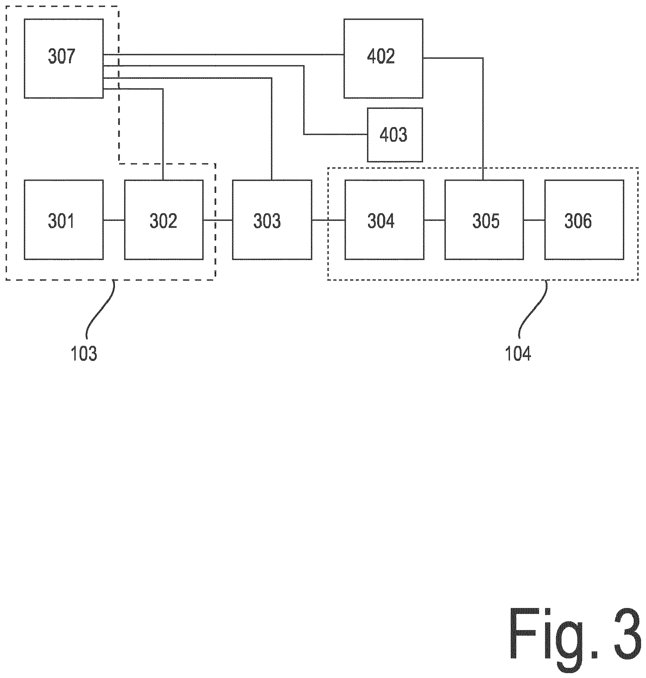

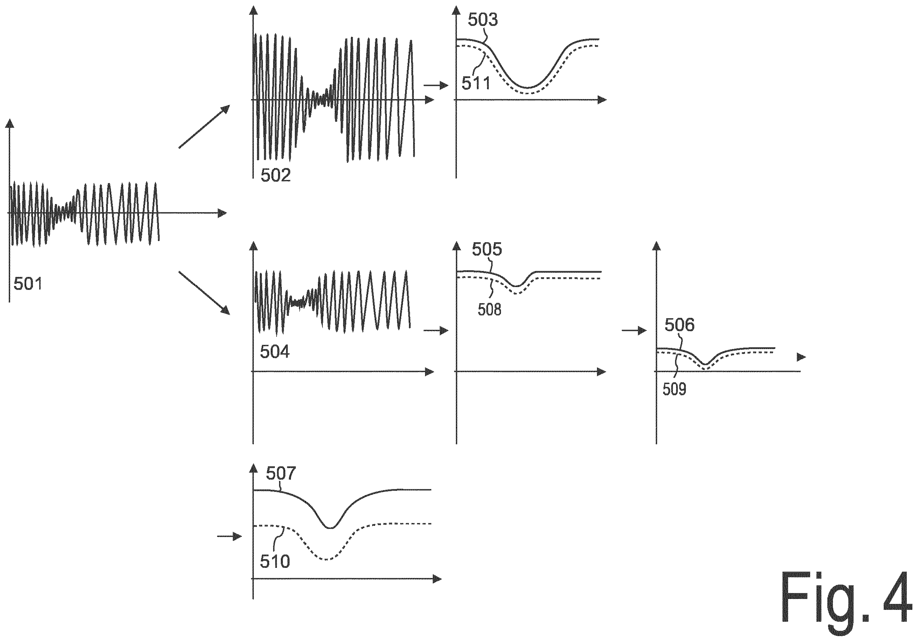

Die Figur 3 zeigt ein schematisches Blockschaltbild der Signalerzeugungseinheit 103, der Verarbeitungseinheit 104, der Sondenimpedanz 303, sowie einer Referenzeinheit 402 des Sensors, welche weiter unten genauer erläutert wird. Die Figur 4 zeigt schematisch die durch die Signalerzeugungseinheit 103 und durch die Verarbeitungseinheit 104 mithilfe der Sondenimpedanz 303 erzeugten Signale.

Die Signalerzeugungseinheit 103 weist eine Versorgungseinheit 307 einen D/A-Wandler 301, sowie einen spannungsgesteuerten Oszillator 302 (VCO) auf. Der Oszillator 302 ist mit der Versorgungseinheit 307 verbunden und wird mit Hilfe des D/A-Wandlers mit einer Spannungsrampe am Eingang angesteuert. An einem Ausgang des Oszillators 302 wird dadurch ein Quellensignal erzeugt, welches ein Wechselspannungssignal konstanter Amplitude ist und eine Frequenzrampe über einen vordefinierten oder einen benutzerkonfigurierbaren Frequenzhub aufweist. Es ist aber auch denkbar, dass sich die Amplitudenmaxima des Quellensignals periodisch oder nichtperiodisch verändern. Zusätzlich oder alternativ ist es denkbar, dass das Quellensignal keine kontinuierliche Frequenzrampe aufweist, sondern dass die Frequenz in zeitlich aufeinanderfolgenden Schritten stufenweise verändert wird. Das Quellensignal kann beispielsweise einen Frequenzbereich zwischen 100 MHz und 200 MHz kontinuierlich und/oder stufenweise durchfahren.

Das Quellensignal wird dazu verwendet, die Sondenimpedanz 303, welche aus der Induktivität 109 (gezeigt in der Figur 1) und der Messkapazität 110 gebildet ist, mit einer Spannung zu beaufschlagen, welche ein Wechselspannungssignal ist oder einen Wechselspannungsanteil aufweist, wobei die Frequenz kontinuierlich oder stufenweise verändert wird. Das daraus erhaltene Resonanzverhalten wird mithilfe der Verarbeitungseinheit 104 aufbereitet. Wie in der Figur 3 gezeigt ist, weist die Verarbeitungseinheit 104 einen Amplitudendemodulator 304 (Hüllkurvendemodulator) und eine Verstärkungseinheit 305 auf, welche dem Amplitudendemodulator 304 nachgeschaltet ist. Das verstärkte Signal, welches den Resonanzverlauf repräsentiert, wird mithilfe eines A/D-Wandlers 306 der Verarbeitungseinheit 104 digitalisiert. Mit Hilfe des digitalisierten Signals wird der Resonanzverlauf durch die Steuereinheit 105 (gezeigt in der Figur 2) analysiert und das Ausgabesignal des Sensors erzeugt.

Das Signal 501 der Figur 4 zeigt den Wechselspannungsanteil des Messsignals, welches mithilfe der mit dem Quellensignal beaufschlagten Sondenimpedanz gewonnen wird. Das Signal 501 weist Frequenzanteile der Frequenzrampe des Quellensignals auf, welche das Trägersignal bilden, wobei das Trägersignal, verursacht durch das Resonanzverhalten der Sondenimpedanz, amplitudenmoduliert ist. Bei der Resonanzfrequenz ist die Signalamplitude verringert, da bei der Resonanzfrequenz der Impedanzbetrag der Sondenimpedanz ein Minimum aufweist.

Wie mit dem Signal 504 dargestellt ist, beinhaltet das Messsignal zusätzlich zum Wechselspannungsanteil einen Gleichspannungsanteil, um ein Signal 504 mit höheren Signalwerten bereitzustellen. Dadurch werden die Signalwerte des Eingangssignals des Amplitudendemodulators (gezeigt in der Figur 3) so erhöht, dass an den positiven Amplitudenmaxima des Wechselspannungsanteils die Schwellenspannung einer Diode des Amplitudendemodulators 304, welche zur Gleichrichtung verwendet wird, überschritten wird.Gemäß einem weiteren Aspekt der Erfindung wird als Messsignal das Signal 501 erzeugt und mit Hilfe einer separaten, nachgeschalteten Schaltung, welche beispielsweise in der Verarbeitungseinheit 104 angeordnet ist, ein Gleichspannungsanteil addiert, um das Signal 504 zu erhalten.

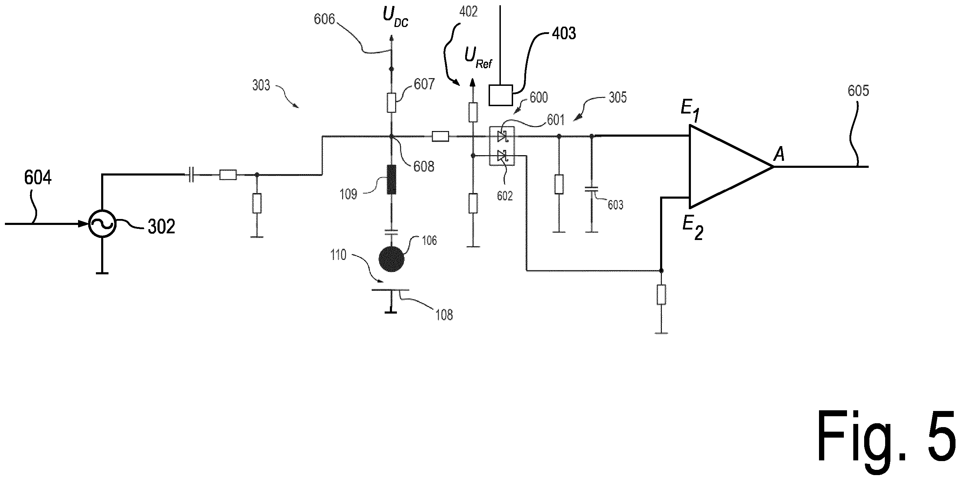

Wie in der Figur 3 dargestellt ist (und mit Bezug auf die Figur 5 weiter unten genauer erläutert wird), wird der Gleichspannungsanteil dadurch erzeugt, dass die Sondenimpedanz 303 von der Versorgungseinheit eine Gleichspannung erhält. Die Gleichspannung kann temperaturunabhängig oder im Wesentlichen temperaturunabhängig sein.

In der Figur 4 ist des Weiteren das demodulierte Signal 505 dargestellt, welches vom Amplitudendemodulator auf Basis des Signals 504 ausgegeben wird, und welches im Wesentlichen das Resonanzverhalten der Sondenimpedanz repräsentiert. In dem gezeigten Ausführungsbeispiel hat das demodulierte Signal 505, bedingt durch die Temperaturabhängigkeit der Kennlinie der Gleichrichterdiode des Amplitudendemodulators, eine Temperaturabhängigkeit, welche im Wesentlichen einem Offset entspricht, wie dies in der Figur 4 durch die gestrichelte Linie 508 unterhalb des demodulierten Signals 505 schematisch dargestellt ist. Die gestrichelte Linie 508 zeigt das Ausgangssignal des Amplitudendemodulators bei einer geringeren Temperatur. Es ist vorteilhaft, das Ausgangssignal 505 des Amplitudendemodulators zu verstärken, um eine genügend große Zuverlässigkeit in der Überwachung des Grenzstandes zu erhalten. Dadurch kann eine Auflösung des Signals verbessert werden, insbesondere um mehrere Bits. Dies ermöglicht es beispielsweise, einen Arbeitsbereich des A/D-Wandlers 306 (gezeigt in der Figur 3) besser auszunutzen. Wie im Nachfolgenden beschrieben ist, erzeugt dies jedoch einen vergleichsweise großen Fehler, wenn die Temperaturabhängigkeit nicht kompensiert wird.

Wie nämlich durch das Signal 506 dargestellt ist, ist es zur Verstärkung erforderlich, vom Ausgangssignal 505 zunächst eine Gleichspannung abzuziehen und die Differenz zu verstärken, sodass das verstärkte Signal 507 erhalten wird.

Wie dies an den gestrichelt dargestellten Signalen 509 und 510 zu erkennen ist, welche dem Ausgabesignal 508 des Amplitudendemodulators bei einer geringeren Temperatur entsprechen, wird durch die Differenzbildung und Verstärkung auch die Temperaturabhängigkeit verstärkt, wodurch eine zuverlässige Überwachung des Grenzstandes beeinträchtigt werden kann.

Es hat sich jedoch gezeigt, dass es möglich ist, diese Temperaturabhängigkeit effizient zu kompensieren. Dies ermöglicht die Bereitstellung eines Sensors, welcher für einen breiten Bereich an Prozesstemperaturen spezifiziert werden kann. Beispielsweise ist der Sensor gemäß dem Ausführungsbeispiel durch die Kompensation der Temperaturabhängigkeit für einen vergleichsweise breiten Bereich an Prozesstemperaturen von -40°C bis +115 °C einsatzfähig.

Zur Korrektur des demodulierten Signals 505 weist der Sensor gemäß dem Ausführungsbeispiel eine Referenzeinheit 402 (gezeigt in der Figur 3) auf, welche in Signalverbindung mit der Versorgungseinheit 307 ist, um von der Versorgungseinheit 307 ein temperaturunabhängiges oder im Wesentlichen temperaturunabhängiges Gleichspannungssignal zu erhalten. Die Referenzeinheit 402 weist eine Diode auf, welche mit der Gleichrichterdiode des Amplitudendemodulators 304 thermisch gekoppelt ist. Beispielsweise können beide Dioden in einem gemeinsamen Gehäuse eines Halbleitermoduls angeordnet sein, um eine ausreichende wärmeleitende Verbindung bereitzustellen, wie dies weiter unten mit Bezug auf die Figur 5 erläutert wird. Es sind jedoch auch andere Konfigurationen zur thermischen Kopplung zwischen der Diode der Referenzeinheit 402 und der Diode des Amplitudendemodulators 304 denkbar. Die Dioden können eine im Wesentlichen gleiche Kennlinie und/oder eine im Wesentlichen gleiche Temperaturabhängigkeit der Kennlinie aufweisen. Insbesondere können die Dioden baugleich sein.

Das Ausgangssignal der Referenzeinheit 402 ist ein Gleichspannungssignal. Dieses Gleichspannungssignal und das demodulierte Ausgangssignal des Amplitudendemodulators werden als Eingangssignale der Verstärkungseinheit 305 der Auswerteeinheit 104 zugeführt, welche einen Differenzverstärker aufweist. Durch die Differenz beider Signale wird die Temperaturabhängigkeit des demodulierten Signals kompensiert. Die Eingangsspannung für die Referenzeinheit 402 wird so gewählt, dass das Ausgangssignal des Differenzverstärkers keinen Nulldurchgang aufweist und somit einen genügend großen Abstand zum Nullpunkt aufweist. Dadurch kann die Ermittlung der Resonanzfrequenz und der Amplitude bei der Resonanzfrequenz eine Grenzstandüberwachung mit ausreichender Genauigkeit erfolgen.

Wie ferner in der Figur 3 dargestellt ist, kann der Sensor einen Temperatursensor 403 aufweisen. Der Temperatursensor 403 kann ausgebildet sein, eine Temperatur der Gleichrichterdiode des Amplitudendemodulators 304 und der Diode der Referenzeinheit 402, welche miteinander thermische gekoppelt sind, zu erfassen. Die Versorgungseinheit 307 kann ausgebildet sein, das Gleichspannungssignal, welches die Referenzeinheit 402 von der Versorgungseinheit 307 erhält, abhängig von der erfassten Temperatur einzustellen. Zusätzlich oder alternativ kann die Versorgungseinheit 307 ausgebildet sein, den Gleichspannungsanteil des Messsignals und/oder einen Gleichspannungsanteil, welcher mit Hilfe einer Schaltung der Verarbeitungseinheit 104 zum Messsignal addiert wird, abhängig vom erfassten Temperaturwert einzustellen.

Dadurch kann für jede Temperatur sichergestellt werden, dass das Ausgangssignal des Differenzverstärkers bei der jeweiligen Temperatur keinen Nulldurchgang aufweist und/oder dass die Differenz zwischen dem demodulierten Ausgangssignal des Amplitudendemodulators und dem Ausgangssignal der Referenzeinheit nicht in den Grenzbereich der Verstärkungseinheit 305 gelangt. In anderen Worten ist es dadurch möglich, das Messsignal und/oder die Signalverarbeitung des Messsignals abhängig von der erfassten Temperatur zu optimieren.

Der Sensor kann so ausgebildet sein, dass die Einstellung des Gleichspannungssignals, welches die Referenzeinheit 402 von der Versorgungseinheit 307 erhält, des Gleichspannungsanteils des Messsignals und/oder des Gleichspannungsanteils, welcher von einer Schaltung zum Messsignal addiert wird, abhängig von einer Lookup-Tabelle erfolgt. Die Lookup-Tabelle kann beispielsweise in einem Datenspeicher der Versorgungseinheit 307 gespeichert sein.

In der Figur 4 sind ferner beispielhaft die Signale 502 und 503 eines Vergleichsbeispiels dargestellt, welches nicht vom beanspruchten Gegenstand erfasst ist. Das Signal 502 wird mithilfe eines Hochfrequenzverstärkers aus einem Messsignal 501 erhalten, welches ein Wechselspannungssignal ist. Die nachfolgende Amplitudendemodulation ergibt dann das Signal 503. Das demodulierte Signal 503 gibt das Resonanzverhalten wieder. Auch hierbei wird durch die Amplitudendemodulation ein Fehler erzeugt (schematisch durch das gestrichelt dargestellte Signal 511 dargestellt). Dieser Fehler ist jedoch vergleichsweise gering, da die Demodulation erst nach der Verstärkung erfolgt. Die Verwendung eines Hochfrequenzverstärkers bringt jedoch hohe Kosten mit sich und verringert die Robustheit des Sensors. Ferner hat ein solcher Hochspannungsverstärker eine vergleichsweise hohe Leistungsaufnahme.

Die Figur 5 zeigt einen Schaltplan für den Oszillator 302, die Sondenimpedanz 303, welche aus der Induktivität 109 und der Messkapazität 110 besteht, für die Referenzeinheit 402, für den Amplitudendemodulator 304 (gezeigt in der Figur 3) und für die Verstärkungseinheit 305. Der Amplitudendemodulator 304 (gezeigt in der Figur 3) weist die Signalumwandlungseinheit 601 (gezeigt in der Figur 5) als Gleichrichterdiode auf, sowie den Glättungskondensator 603. Die Referenzeinheit 402 wird von der Versorgungseinheit mit einem temperaturunabhängigen oder im Wesentlichen temperaturunabhängigen Gleichspannungssignal *U_{Ref}* versorgt und weist die Signalumwandlungseinheit 602 als Diode auf. Die Signalumwandlungseinheiten 601 und 602 sind in einem gemeinsamen Halbleitermodul 600 angeordnet, welches beispielsweise durch das Halbleitermodul BAT 17-07 von Infineon bereitgestellt werden kann, welches zwei parallele Schottky-Dioden aufweist, welche in einem gemeinsamen SMD-Gehäuse angeordnet sind.

Durch eine positive Spannung *U_{DC}* von 3V am Anschluss 606, welcher über einen Widerstand 607 mit der Induktivität 109 verbunden ist, wird das Messsignal am Knotenpunkt 608 angehoben, damit die Amplitudenmaxima des Messsignals die Schwellenspannung der Gleichrichterdiode 601 des Amplitudendemodulators 304 (gezeigt in der Figur 3) überschreiten, wie dies mit Bezug auf das in der Figur 4 dargestellte Signal 504 beschrieben wurde. Die Spannung *U_{DC}* kann temperaturunabhängig oder im Wesentlichen temperaturunabhängig sein und und von der Versorgungseinheit 307 bereitgestellt sein.

Wie ferner in der Figur 5 dargestellt ist, weist die Verstärkungseinheit einen Differenzverstärker auf, welcher die Eingangssignale *E₁* und *E₂* zu einem verstärkten Ausgangssignal *A* = *V·*(*E₁-E₂*) verstärkt, wobei *V* ein Verstärkungsfaktor des Differenzverstärkers ist. Dadurch wird an einem Ausgang 605 der Verstärkungseinheit 305 die verstärkte Resonanzkurve ausgegeben, wie diese als Signal 507 in der Figur 4 dargestellt ist.

Die Versorgungseinheit 307 (gezeigt in der Figur 3) kann so ausgebildet, das Gleichspannungssignal *U_{Ref},* sowie die Spannung *U_{DC}* abhängig von Temperaturen eines Temperatursensors 403 einzustellen, welcher die Temperatur der Signalumwandlungseinheiten 601 und 602 erfasst. Der Temperatursensor kann thermisch mit den Signalumwandlungseinheiten 601 und 602 gekoppelt sein.

Mit dem gezeigten Ausführungsbeispiel konnte daher gezeigt werden, dass es möglich ist, einen einfach aufgebauten und robusten Grenzstandsensor bereitzustellen, welcher eine zuverlässige Grenzstandüberwachung ermöglicht.

## Patentansprüche

1. Sensor (100) zur Erzeugung eines Ausgabesignals zur Detektion eines Grenzstandes eines Mediums, eines Füllstandes des Mediums, und/oder zur Unterscheidung unterschiedlicher Medien, wobei der Sensor (100) aufweist:
eine Verarbeitungseinheit (104) zur Verarbeitung eines Messsignals (501) welches mit Hilfe des Sensors (100) erzeugt wurde und eine Referenzeinheit (402) zur Erzeugung eines Referenzsignals; wobei das Messsignal (501) ein periodisches Wechselspannungssignal aufweist oder ein periodisches Wechselspannungssignal ist;
wobei die Verarbeitungseinheit (104) ausgebildet ist, eine Temperaturkompensation unter Verwendung des Referenzsignals durchzuführen,
wobei die Verarbeitungseinheit (104) und die Referenzeinheit (402) jeweils eine Signalumwandlungseinheit (601, 602) mit einer temperaturabhängigen Signalumwandlung aufweist, wobei die Signalumwandlungseinheiten (601, 602) thermisch miteinander gekoppelt sind;
wobei die Temperaturkompensation eine Kompensation der Temperaturabhängigkeit der Signalumwandlungseinheit (601) der Verarbeitungseinheit (104) mit Hilfe der thermischen Kopplung umfasst;
**gekennzeichnet dadurch, dass** der Sensor (100) so ausgebildet ist, dass (a) und/oder (b) zutrifft:
(a) die Referenzeinheit (402) erhält ein Eingangssignal, welches ein im Wesentlichen temperaturunabhängiges Gleichspannungssignal ist, wobei die Referenzeinheit (402) das Referenzsignal in Abhängigkeit vom Eingangssignal erzeugt, wobei das Referenzsignal ein Gleichspannungssignal ist; und/oder
(b) das Messsignal weist einen Wechselspannungsanteil und einen Gleichspannungsanteil auf und/oder mit Hilfe einer Schaltung des Sensors (100) wird zum Messsignal ein Gleichspannungsanteil addiert.

2. Sensor (100) gemäß Anspruch 1, wobei (b) zutrifft und das Messsignal einen Gleichspannungsanteil und einen Wechselspannungsanteil aufweist, wobei der Gleichspannungsanteil des Messsignals dadurch erzeugt wird, dass eine Sondenimpedanz (303) des Sensors (100) von einer Versorgungseinheit des Sensors (100) eine Gleichspannung erhält.

3. Sensor (100) gemäß Anspruch 1 oder 2, wobei der Sensor (100) ausgebildet ist, mit Hilfe des Mediums eine Sondenimpedanz auszubilden, wobei das Messsignal (501) von der Sondenimpedanz abhängt.

4. Sensor (100) gemäß Anspruch 3, wobei der Sensor (100) ausgebildet ist, die Sondenimpedanz mit einem Signal zu beaufschlagen, welches ein Wechselspannungssignal ist oder einen Wechselspannungsanteil enthält.

5. Sensor (100) gemäß Anspruch 3 oder 4, wobei der Sensor (100) eine Induktivität (109) aufweist, welche in Serie mit einer Kapazitätselektrode (106) des Sensors (100) geschaltet ist;
wobei die Kapazitätselektrode (106) zu einer kapazitiven Messung an dem Medium ausgebildet ist.

6. Sensor (100) gemäß einem der vorangehenden Ansprüche, wobei die Verarbeitungseinheit (104) abhängig vom Referenzsignal eine verstärkte oder unverstärkte Signaldifferenz erzeugt.

7. Sensor (100) gemäß einem der vorangehenden Ansprüche, wobei (b) zutrifft und wobei die Signalumwandlungseinheit (601) der Verarbeitungseinheit (104) eine Diode aufweist, welche als Gleichrichter fungiert.

8. Sensor (100) gemäß Anspruch 7, wobei die Diode ein Teil eines Demodulators der Verarbeitungseinheit (104) ist.

9. Sensor (100) gemäß Anspruch 8, wobei der Demodulator ein Amplitudendemodulator (304) ist.

10. Sensor (100) gemäß einem der vorangehenden Ansprüche, wobei zumindest (b) zutrifft und wobei der Sensor (100) einen Temperatursensor (403) aufweist zur Erfassung eines Temperaturwertes.

11. Sensor (100) gemäß Anspruch 10, wobei der Sensor (100) zur Erfassung eines Temperaturwertes der Signalumwandlungseinheiten (601, 602) angeordnet und ausgebildet ist.

12. Sensor (100) gemäß Anspruch 10 oder 11, wobei der Sensor (100) ausgebildet ist, eine Höhe des Referenzsignals und/oder eine Höhe des Gleichspannungsanteils abhängig von dem erfassten Temperaturwert einzustellen.

## Claims

1. A sensor (100) for generating an output signal for detecting a limit level of a medium, a filling level of the medium, and/or for differentiating between different media, wherein the sensor (100) comprises:
a processing unit (104) for processing a measurement signal (501) which was generated using the sensor (100), and a reference unit (402) for generating a reference signal; wherein the measurement signal (501) comprises a periodic AC voltage signal or wherein the measurement signal (501) is a periodic AC voltage signal;
wherein the processing unit (104) is configured to perform temperature compensation using the reference signal;
wherein the processing unit (104) and the reference unit (402) each have a signal conversion unit (601, 602) providing temperature-dependent signal conversion, wherein the signal conversion units (601, 602) are thermally coupled to one another;
wherein said temperature compensation comprises compensating for the temperature dependency of the signal conversion unit (601) of the processing unit (104) using the thermal coupling;
**characterized in that** the sensor (100) is configured such that (a) and/or (b) is true:
(a) the reference unit (402) receives an input signal which is a substantially temperatureindependent DC voltage signal, the reference unit (402) generating the reference signal as a function of the input signal, the reference signal being a DC voltage signal; and/or
(b) the measurement signal has an AC voltage component and a DC voltage component and/or a DC voltage component is added to the measurement signal using a circuit of the sensor (100).

2. The sensor (100) according to claim 1, wherein (b) applies and the measurement signal comprises a DC voltage component and an AC voltage component, wherein the DC voltage component of the measurement signal is generated by a probe impedance (303) of the sensor (100) receiving a DC voltage from a supply unit of the sensor (100).

3. The sensor (100) according to claim 1 or 2, wherein the sensor (100) is designed to form a probe impedance with the aid of the medium, wherein the measurement signal (501) depends on the probe impedance.

4. The sensor (100) according to claim 3, wherein the sensor (100) is designed to apply a signal to the probe impedance which is an AC voltage signal or contains an AC voltage component.

5. The sensor (100) according to claim 3 or 4, wherein the sensor (100) comprises an inductance (109) which is connected in series with a capacitance electrode (106) of the sensor (100);
wherein the capacitance electrode (106) is designed for a capacitive measurement on the medium.

6. The sensor (100) according to any one of the preceding claims, wherein the processing unit (104) generates an amplified or unamplified signal difference depending on the reference signal.

7. The sensor (100) according to any one of the preceding claims, wherein (b) applies and wherein the signal conversion unit (601) of the processing unit (104) comprises a diode acting as a rectifier.

8. The sensor (100) according to claim 7, wherein the diode is a part of a demodulator of the processing unit (104).

9. The sensor (100) according to claim 8, wherein the demodulator is an amplitude demodulator (304).

10. The sensor (100) according to any one of the preceding claims, wherein at least (b) applies and wherein the sensor (100) comprises a temperature sensor (403) for detecting a temperature value.

11. The sensor (100) according to claim 10, wherein the sensor (100) is arranged and configured to detect a temperature value of the signal conversion units (601, 602).

12. The sensor (100) according to claim 10 or 11, wherein the sensor (100) is designed to set a level of the reference signal and/or a level of the DC voltage component depending on the detected temperature value.

## Revendications

1. Capteur (100) destiné à générer un signal de sortie pour détecter un niveau de seuil d'un milieu, un niveau de remplissage du milieu, et/ou pour différencier différents milieux, dans lequel le capteur (100) comporte :
une unité de traitement (104) pour traiter un signal de mesure (501) qui a été généré en utilisant le capteur (100) et une unité de référence (402) pour générer un signal de référence ; dans lequel le signal de mesure (501) comporte un signal de tension à variation périodique ou est un signal de tension à variation périodique ;
dans lequel l'unité de traitement (104) est configurée pour effectuer une compensation de température en utilisant le signal de référence ;
dans lequel l'unité de traitement (104) et l'unité de référence (402) comportent respectivement une unité de conversion de signal (601, 602) assurant une conversion de signal en fonction de la température, dans lequel les unités de conversion de signal (601, 602) sont thermiquement couplées l'une à l'autre ;
dans lequel la compensation de température comprend une compensation de la dépendance à la température de l'unité de conversion de signal (601) de l'unité de traitement (104) en utilisant le couplage thermique ;
**caractérisé en ce que** le capteur (100) est configuré de sorte que (a) et/ou (b) s'applique :
(a) l'unité de référence (402) reçoit un signal d'entrée qui est un signal de tension continue sensiblement indépendant de la température, dans lequel l'unité de référence (402) génère le signal de référence en fonction du signal d'entrée, dans lequel le signal de référence est un signal de tension continue ; et/ou
(b) le signal de mesure comporte une composante de tension alternative et une composante de tension continue et/ou une composante de tension continue est ajoutée au signal de mesure en utilisant un circuit du capteur (100) .

2. Capteur (100) selon la revendication 1, dans lequel (b) s'applique et le signal de mesure comporte une composante de tension continue et une composante de tension alternative, dans lequel la composante de tension continue du signal de mesure est générée de telle sorte qu'une impédance de sonde (303) du capteur (100) reçoit une tension continue d'une unité d'alimentation du capteur (100).

3. Capteur (100) selon la revendication 1 ou 2, dans lequel le capteur (100) est configuré pour former une impédance de sonde en utilisant le milieu, dans lequel le signal de mesure (501) dépend de l'impédance de sonde.

4. Capteur (100) selon la revendication 3, dans lequel le capteur (100) est configuré pour appliquer à l'impédance de sonde un signal qui est un signal de tension alternative ou qui contient une composante de tension alternative.

5. Capteur (100) selon la revendication 3 ou 4, dans lequel le capteur (100) comporte une inductance (109) qui est montée en série avec une électrode capacitive (106) du capteur (100) ;
dans lequel l'électrode capacitive (106) est configurée pour réaliser une mesure capacitive sur le milieu.

6. Capteur (100) selon l'une des revendications précédentes, dans lequel l'unité de traitement (104) génère une différence de signal amplifiée ou non amplifiée en fonction du signal de référence.

7. Capteur (100) selon l'une des revendications précédentes, dans lequel (b) s'applique et dans lequel l'unité de conversion de signal (601) de l'unité de traitement (104) comporte une diode qui agit comme un redresseur.

8. Capteur (100) selon la revendication 7, dans lequel la diode fait partie d'un démodulateur de l'unité de traitement (104).

9. Capteur (100) selon la revendication 8, dans lequel le démodulateur est un démodulateur d'amplitude (304).

10. Capteur (100) selon l'une des revendications précédentes, dans lequel au moins (b) s'applique et dans lequel le capteur (100) comporte un capteur de température (403) pour détecter une valeur de température.

11. Capteur (100) selon la revendication 10, dans lequel le capteur (100) est agencé et configuré pour détecter une valeur de température des unités de conversion de signal (601, 602).

12. Capteur (100) selon la revendication 10 ou 11, dans lequel le capteur (100) est configuré pour régler une hauteur du signal de référence et/ou une hauteur de la composante de tension continue en fonction de la valeur de température détectée.
